# EUROPÄISCHE PATENTSCHRIFT

(11) **EP 2 826 352 B1**
(45) Veröffentlichungstag und Bekanntmachung des Hinweises auf die Patenterteilung: **10.04.2019**
(21) Anmeldenummer: 14002289.8
(22) Anmeldetag: 03.07.2014
(51) Int. Cl.: A01B 71/06, A01D 41/16

(54) **Antriebskuppler**
Drive coupler
Dispositif d'accouplement d'entraînement

(30) Priorität: 16.07.2013 DE 102013011834
(43) Veröffentlichungstag der Anmeldung: 21.01.2015
(73) Patentinhaber: Maschinenfabrik Bernard Krone GmbH, 48480 Spelle (DE)
(72) Erfinder: Schlamann, Frank, 48599 Gronau-Epe (DE)

(56) Entgegenhaltungen:
- EP-A1- 2 591 652
- WO-A1-2007/082354
- WO-A1-2011/095525
- DE-A1- 2 835 049
- DE-A1- 10 324 520

## Beschreibung

Die Erfindung betrifft einen Antriebskuppler zur selbsttätigen, formschlüssigen Verbindung eines Antriebsstrangs, insbesondere zwischen selbstfahrenden landwirtschaftlichen Erntemaschinen oder Trägerfahrzeugen und Anbaugeräten, wobei der Antriebskuppler Mittel zum Ausgleich von Winkel- und Längenabweichungen aufweist.

Aus der DE 103 24 520 A1 ist eine Kupplungsvorrichtung zum Antreiben oder im Antrieb von landwirtschaftlichen Geräten oder Maschinen bekannt, welche beispielsweise zum Verbinden eines Geräts mit einem Getriebe dient, wobei geringe Winkelabweichungen auszugleichen sind. Die Kupplungsvorrichtung weist ein erstes und ein zweites Kreuzgelenk mit jeweils einer Innengabel und einer Außengabel auf. Ein erstes Kupplungselement ist drehfest mit der ersten Außengabel verbunden und dazu bestimmt, zum Übertragen von Drehmomenten mit einem zweiten Kupplungselement gekuppelt zu werden. Zum Längenausgleich ist das erste Kupplungselement auf einer Profilwelle, die mit der ersten Außengabel verbunden ist, axial verschiebbar ausgeführt. Eine Druckfeder, die axial gegen ein Stützelement, welches Bestandteil der Verbindungsmittel der inneren Gabeln ist, und gegen das erste Kupplungselement abgestützt und zwischen diesen vorgespannt ist, erfüllt zwei Funktionen. Zum einen beaufschlagt sie das erste Kupplungselement axial in Richtung zu einer Einkuppelposition, zum anderen sorgt sie dafür, dass das erste Kreuzgelenk zu einer gestreckten Position hin beaufschlagt wird Somit wird ein Abwinkeln des ersten Kreuzgelenks aufgrund der Gewichtskraft der Außengabel und des ersten Kupplungselements vermieden. Nachteilig an der Ausführung nach der DE 103 24 520 A1 ist jedoch, dass die Druckfeder nicht vermag die gesamte Kupplungsvorrichtung axial gestreckt zu halten. Nur durch ein zusätzliches Stützelement, welches ein Abknicken der Kupplungsvorrichtung um das zweite Kreuzgelenk verhindert, wird diese in etwa in Kuppelposition gehalten. Des Weiteren ist die beschriebene Ausführung durch die offene Bauweise, insbesondere der Profilverbindung für den Längenausgleich sehr wartungsintensiv und verschleißanfällig.

Die WO 2011/095525 A1 offenbart eine selbstfahrende Erntemaschine in der Art eines Mähdreschers, bei dem im vorderen Bereich der Erntemaschine an einer Einzugseinrichtung ein Vorsatzgerät zum Aufnehmen des Erntegutes von einer Feld- oder Wiesenfläche an- und abbaubar ausgebildet ist. Zur Übertragung von Antriebsenergie von der Erntemaschine auf das Vorsatzgerät ist der Einzugseinrichtung an ihrer in Fahrtrichtung linken Seite ein Antriebsstrang zugeordnet, welcher im Übergangsbereich von der Einzugseinrichtung auf das Vorsatzgerät einen Antriebskuppler zum selbsttätigen Aufbauen oder Unterbrechen der Antriebsverbindung aufweist. Dabei wird ein Aufbau des Antriebskupplers ersichtlich, bei dem eine Antriebswelle entgegen der Wirkung einer Druckfeder axial verschiebbar angeordnet ist, so dass ein selbsttätiger Längenausgleich des Antriebskupplers beim Ankuppeln stattfinden kann. Für weitere Ausgleichsmaßnahmen zum Ausgleich von beispielsweise Winkelabweichungen beim Kupplungsvorgang ist der Antriebskuppler nicht geeignet, da eine Verwendung von Gelenken oder gar Gleichlaufgelenken nicht vorgesehen sind.

Durch die DE 28 35 049 A1 ist eine selbstfahrende, landwirtschaftliche Arbeitsmaschine mit einem Wechselaufbau offenbart worden, bei der der Wechselaufbau lösbar mit einem Fahrgestell der Arbeitsmaschine verbunden ist. Als Wechselaufbau kann beispielsweise ein Ladewagen- oder Stallmiststreueraufbau vorgesehen sein, dessen Antriebselemente über eine Gelenkwellenverbindung mit einer am Fahrgestell der landwirtschaftlichen Arbeitsmaschine befindlichen Zapfwelle gekoppelt werden können. Weiterhin geht aus dieser Druckschrift hervor, dass der Ankoppelvorgang der Gleichlaufgelenke enthaltenden Gelenkverbindung mit der Zapfwelle des Fahrgestells während des Auf- bzw. Absetzens des Wechselaufbaus selbsttätig erfolgen soll. Um dies zu ermöglichen, ist es vorgesehen, dass die Gleichlaufgelenke enthaltende Gelenkwellenverbindung durch eine, an einer Konsole angebrachten Schwinge in einer etwa horizontalen Lage abgestützt wird. Ohne zusätzliche Abstützmittel ist also bei dieser Arbeitsmaschine eine einen ungehinderten Koppelvorgang ermöglichende Strecklage nicht erreichbar.

Die WO 2007/082354 A1 offenbart eine Antriebsgelenkwelle zur Übertragung von Antriebsenergie zwischen einer landwirtschaftlichen Zug- und Antriebsmaschine und einer daran angehängten Arbeitsmaschine. Zum Ausgleich von Winkelabweichungen zwischen der Abtriebswelle der Zug- und Antriebsmaschine und einer Antriebseingangswelle an der angehängten Arbeitsmaschine bei Kurvenfahrten weist die Antriebsgelenkwelle an ihren Enden Gelenke auf, die hier insbesondere als Gleichlaufgelenke ausgebildet sind. Möglichkeiten, hierbei zu einem selbsttätigen Ankuppeln der Antriebsgelenkwelle zu kommen, werden jedoch nicht offenbart.

Durch die Druckschrift EP 2 591 652 A1 ist die Gestaltung eines Antriebsstranges zwischen einer Zapfwelle einer Zugmaschine und einem Antriebsgetriebe eines Anhängerfahrzeuges bekannt geworden. Zur Vermeidung eines unruhigen Laufs beim Antrieb der Antriebsorgane des Anhängerfahrzeuges ist es vorgesehen, dass der Antriebsstrang auf der Zugdeichsel des Anhängerfahrzeuges zwischengelagert wird. Weiterhin weist der Antriebsstrang Weitwinkelgleichlaufgelenke auf, die insbesondere bei Kurvenfahrten für einen ruhigen Lauf der Antriebselemente des Anhängerfahrzeuges sorgt. Ein selbsttätiges Ankuppeln des Antriebsstranges an die Zugmaschine ist hier jedoch auch nicht vorgesehen.

Es ist daher Aufgabe der Erfindung, einen verbesserten wartungsfreien Antriebskuppler mit Mitteln zum Ausgleich von Winkel- und Längenabweichungen zu schaffen, der unterstützungsfrei, selbstausrichtend eine Position hält und besonders kurz und einbaufreundlich baut.

Die Aufgabe wird erfindungsgemäß durch einen Antriebskuppler gemäß den Merkmalen des Patentanspruchs 1 gelöst. Vorteilhafte Ausgestaltungen des Antriebskupplers sind in den abhängig formulierten Schutzansprüchen angegeben.

Nach der Erfindung wird ein Antriebskuppler zur selbsttätigen, formschlüssigen Verbindung eines Antriebsstrangs, insbesondere zwischen selbstfahrenden landwirtschaftlichen Erntemaschinen oder Trägerfahrzeugen und Anbaugeräten vorgeschlagen, wobei der Antriebskuppler Mittel zum Ausgleich von Winkel- und Längenabweichungen aufweist, zumindest ein Gleichlaufgelenk umfasst und eine Druckfeder aufweist, welche eine gesamte Gelenkwelle, bestehend aus zwei Gleichlaufgelenken und einer Verbindungswelle umhüllt und durch ihre zwischen äußeren Flanschen der Gleichlaufgelenke vorgespannte Einbaulage dazu eingerichtet ist, ein Abwinkeln des zumindest einen Gleichlaufgelenks zu verhindern und den Antriebskuppler insgesamt unterstützungsfrei in einer linear gestreckten Position auszurichten.

Es wird ein Antriebskuppler vorgeschlagen, bei dem nicht wie aus dem Stand der Technik bekannt Kreuzgelenke für den Ausgleich von Winkelabweichungen zum Einsatz kommen, sondern Gleichlaufgelenke. Gleichlaufgelenke, welche auch als homokinetische Gelenke bezeichnet werden, sind aus dem Maschinenbau und insbesondere von Antriebswellen aus dem Automobilbau bekannt. Sie übertragen, anders als einfache Kardangelenke, die Drehbewegung gleichförmig. Das heißt, die Winkelgeschwindigkeiten der An- und Abtriebsseite weichen auch im gebeugten Zustand des Gelenks nicht voneinander ab. Somit werden Unregelmäßigkeiten im Antriebsstrang und zusätzliche Belastungen der umgebenen Komponenten vermieden. Die erfindungsgemäße Verwendung von Gleichlaufgelenken für einen Antriebskuppler bringen jedoch noch weitere Vorteile mit sich.

So sind Gleichlaufgelenke in der Regel mit einem Faltenbalg aus Gummi gegen Verschmutzung gekapselt und durch eine Fettfüllung dauergeschmiert und damit vorteilhaft wartungsfrei und vor äußeren Einflüssen geschützt. Des Weiteren sind Gleichlaufgelenke im Verhältnis zu entsprechenden Kreuzgelenken sehr kompakt, wodurch ein Antriebskuppler nach der Erfindung mit zwei Gleichlaufgelenken besonders kurz und einbaufreundlich baut.

Gleichlaufgelenke gibt es in verschiedenen Ausführungen. Unterschieden wird nach dem möglichen Beugewinkel und insbesondere nach Fest- und Verschiebegelenk. Ein Gleichlauf-Verschiebegelenk gestattet neben der gleichförmigen Übertragung von Drehbewegungen unter Beugewinkeln auch eine Verschiebung der Abtriebswelle und der Antriebswelle zueinander. Ein derartiges Gleichlauf-Verschiebegelenk ist beispielsweise aus der DE 38 20 449 A1 bekannt.

Da die Axialverschiebung über in Kugelbahnen laufende Kugeln erfolgt, ist die Reibungskraft bei rollender Reibung wesentlich geringer als bei gleitender Reibung, wie sie bei einem alternativen Längenausgleich durch Verschiebung einer Profilnabe auf einer Profilwelle entsteht.

Dieses ist ein weiterer Vorteil einer Ausführungsform eines Antriebskupplers nach der Erfindung mit zumindest einem Gleichlauf-Verschiebegelenk. Da der Verschiebebereich innerhalb des Gleichlaufgelenks durch Anschläge auf einen relativ engen Bereich begrenzt ist, können in einer weiteren Ausführung eines erfindungsgemäßen Antriebkupplers mit größerem Längenausgleich auch beide Gelenke als Gleichlauf-Verschiebegelenke ausgeführt sein.

Eine Druckfeder, welche die gesamte Gelenkwelle bestehend aus zwei Gleichlaufgelenken und einer Verbindungswelle umhüllt, ist besonders vorteilhaft zwischen jeweils äußeren Flanschen der Gleichlaufgelenke vorgespannt angeordnet. Durch diese erfindungsgemäße Einbaulage, wird immer eine optimale Ausrichtung des Antriebskupplers in gestreckter Lage sichergestellt. Eine zusätzliche Unterstützung des ungekuppelten Kupplers ist nicht notwendig.

Somit ist ein verbesserter Antriebskuppler für ein betriebssicheres Kuppeln eines Antriebsstranges, insbesondere zwischen landwirtschaftlichen Erntemaschinen und Anbaugeräten auch unter Winkel und Längenabweichungen durch die Erfindung bereitgestellt.

Die vorliegende Erfindung ist weiterhin auf eine selbstfahrende Erntemaschine mit einer Antriebseinheit und einem Antriebsstrang zum Antrieb von ankoppelbaren Erntevorsätzen gerichtet, wobei ein erfindungsgemäßer Antriebskuppler zur automatischen Kopplung des Antriebsstrangs mit Antriebsmitteln des Erntevorsatzes zur Drehmomentübertragung vorgesehen ist.

Die Erfindung wird nachstehend anhand der Figuren näher erläutert. Die Figuren zeigen eine bevorzugte Ausführungsvariante der Erfindung, auf die sie jedoch nicht beschränkt ist.

### Es zeigen schematisch

**Fig. 1****:** eine selbstfahrende Erntemaschine mit einem Erntevorsatzgerät und einem erfindungsgemäßen Antriebskuppler im Antriebsstrang zum Erntevorsatzgerät;
**Fig. 2****:** einen erfindungsgemäßen Antriebskuppler im Detail.

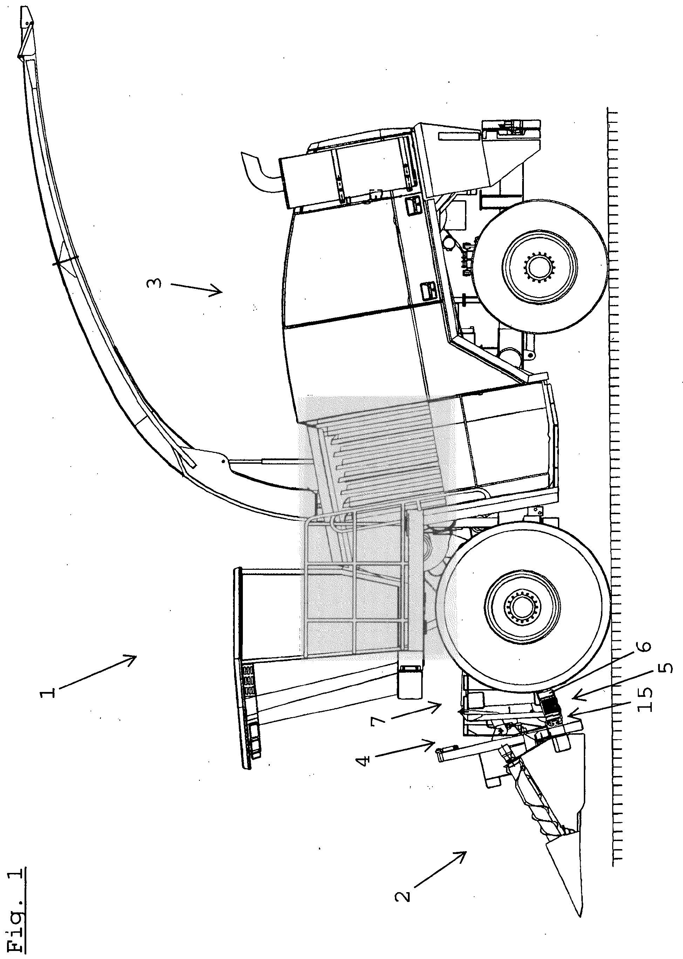

Der in **Fig. 1** dargestellte Feldhäcksler 1 als Ausführungsbeispiel einer selbstfahrenden landwirtschaftlichen Erntemaschine ist mit einem Maiserntevorsatz 2 als Anbaugerät ausgerüstet. Ein nicht dargestellter Verbrennungsmotor dient als Antriebsaggregat 3 für den Fahrantrieb und zum Antrieb sowohl der internen Arbeitsaggregate des Feldhäckslers 1, als auch zum Antrieb von Anbaugeräten wie dem Maiserntevorsatzgerät 2. Erntevorsätze für Feldhäcksler 1 gibt es in verschiedenen Ausführungen und Arbeitsbreiten für unterschiedliche Ernteaufgaben. So kommt ein Wechsel eines Erntevorsatzgerätes an einem selbstfahrenden Feldhäcksler recht häufig vor. Bei großen Arbeitsbreiten kann es zur Einhaltung von Vorschriften für den Straßenverkehr notwendig sein, das Vorstzgerät 2 zu demontieren und auf einem entsprechenden Anhänger für den Straßentransport zu transportieren.

Um den An- und Abbauvorgang möglichst schnell und einfach zu gestalten, sind deshalb bereits verschiedenste Verbesserungen zur Unterstützung bekannt. Insbesondere die Kopplung des mechanischen Antriebsstranges vom Feldhäcksler 1 zum Vorsatzgerät 2 stellt dort jedoch aufgrund der geforderten Präzision und der hohen Antriebskräfte besondere Herausforderungen.

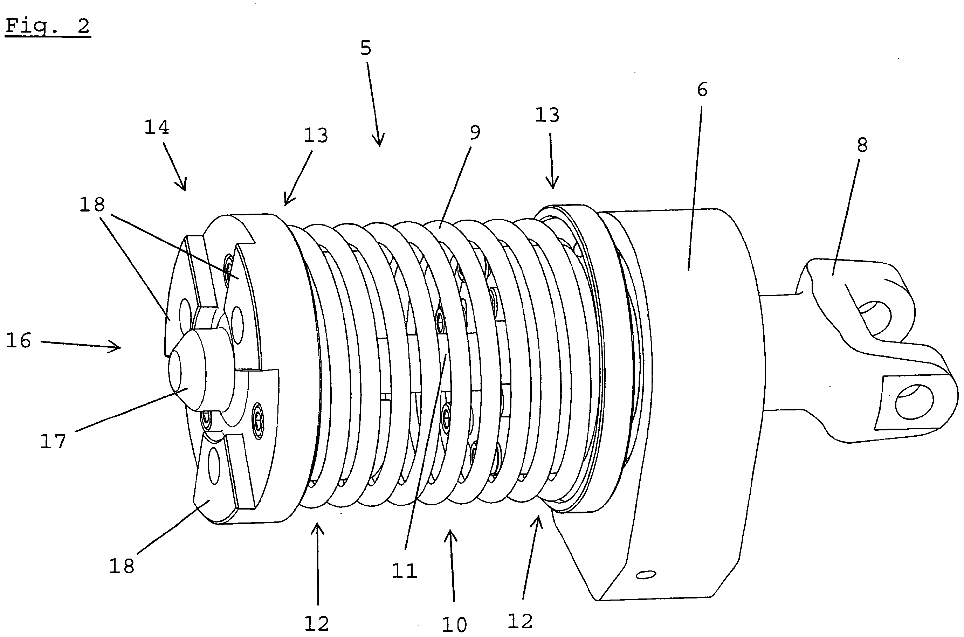

**In** **Fig. 1** ist der in diesem Bereich der Trennstelle 4 zwischen Antriebsmaschine 1 und Anbaugerät 2 angeordnete erfindungsgemäße Antriebskuppler 5 gut zu erkennen. Der Antriebskuppler 5 ist dort genauestens ausgerichtet in einem Lagerbock 6 am Einzugsgehäuse 7 des Feldhäckslers gelagert. Die weitere kraftübertragende Verbindung zum Antriebsaggregat 3 des Feldhäckslers 1 stellt eine Gelenkwelle her, von der in der schematischen Darstellung des Antriebskupplers 5 in **Fig. 2** die äußere Gelenkgabel 8 gezeigt ist. Des Weiteren ist in **Fig. 2** deutlich die Druckfeder 9 zu erkennen, die die Gleichlaufgelenkwelle 10, bestehend aus einer Verbindungswelle 11 und zwei Gleichlaufgelenken 12 umschließt. Dabei wird die Druckfeder 9 zwischen Stützscheiben 13 zentriert und vorgespannt, wobei die Stützscheiben jeweils mit den äußeren Gelenkkörpern der Gleichlaufgelenke 12 verbunden sind und somit die Druckfeder 9 beide Gelenke 9 axial ausrichtet und gestreckt hält.

Da für den notwendigen Längenausgleich des Antriebskupplers 5 dieser in einer besonders vorteilhaften erfindungsgemäßen Ausführung zumindest ein Gleichlaufgelenk 12 mit Längenausgleich, ein sogenanntes Gleichlauf-Verschiebegelenk aufweist, beaufschlagt die Druckfeder 9 die Gleichlaufgelenkwelle 10 auch immer in Richtung ihrer längsten Erstreckung.

Die äußere der beiden Stützscheiben 13, welche im ungekuppelten Zustand des Antriebskupplers 5 dessen freies Ende bildet, ist zugleich das erste Kupplungselement 14, welches zum Übertragen von Drehmomenten zum Maiserntevorsatzgerät 2 mit einem zweiten Kupplungselement 15 am Vorsatzgerät 2 kuppelbar ist. Dazu weist die axiale Stirnfläche 16 des ersten Kupplungselements 14 einen axial hervorstehenden Zentrierdorn 17 und ebenfalls axial hervorstehende Mitnehmernocken 18 auf.

Beim Kuppelvorgang gewährleistet der weiter hervorstehende Zentrierdorn 17 durch Eingreifen in eine Zentrierbohrung des zweiten Kupplungselementes 15 eine koaxiale Ausrichtung der beiden Kuppelelemente 14, 15 zueinander. Im weiteren Verlauf des Kuppelvorgangs greifen im günstigen Fall die Mitnehmernocken 18 des ersten Kupplungselements 14 in Lücken zwischen den Mitnehmernocken des zweiten Kupplungselements 15, wodurch eine formschlüssige Verbindung hergestellt ist. Die Einbaulage des Antriebskupplers 5 ist dabei so auf die Kuppelsituation abgestimmt, dass im gekuppelten Zustand der Längenausgleich des Antriebskupplers etwas in Anspruch genommen wird und dadurch die Druckfeder 9 das erste Kupplungselement 14 axial mit Druck gegen das zweite Kupplungselement 15 beaufschlagt.

Wenn beim Kuppelvorgang die Stellung des ersten Kupplungselements 14 zum zweiten Kupplungselements 15 derart verdreht zueinander ist, dass die Mitnehmernocken 18 nicht gleich in die entsprechenden Aussparungen des Gegenelementes eingreifen, stoßen die Mitnehmernocken der beiden Kupplungselemente 14, 15 aufeinander. Durch den möglichen Längenausgleich innerhalb des Antriebskupplers 5 weicht dabei das erste Kupplungselement 14 axial aus. Beim Anlauf der Maschine verdrehen beide durch den Zentrierdorn 17 zueinander ausgerichteten und geführten Kupplungselemente 14, 15 so weit gegeneinander, bis sich die Mitnehmernocken 18 des ersten Kupplungselements 14 mit den entsprechenden Aussparungen des zweiten Kupplungselements 15 decken und in diese Eingreifen.

In **Fig. 2** ist die besonders kurze Baulänge des erfindungsgemäßen Antriebskupplers 5 gut zu erkennen, welche nur durch die Verwendung einer Gleichlaufgelenkwelle 10 erreichbar ist. Besonders vorteilhaft wirkt sich die kurze Bauform auf die Druckfeder 9 aus. Obwohl sie die gesamte Gelenkwelle 10 umgibt und beide Gleichlaufgelenke 12 abstützt und gestreckt ausrichtet, kann sie so kurz ausgeführt werden, dass auch bei hohen Drehzahlen ein Ausbauchen vermieden und somit ein ruhiger Lauf gewährleistet wird. Die Wartungsfreiheit der gekapselten und dauergeschmierten Gleichlaufgelenke 12 und damit des gesamten Antriebskupplers 5 nach der Erfindung ist ein weiterer großer Vorteil gegenüber dem Stand der Technik.

## Patentansprüche

1. Antriebskuppler (5) zur selbsttätigen, formschlüssigen Verbindung eines Antriebsstrangs, insbesondere zwischen selbstfahrenden landwirtschaftlichen Erntemaschinen (1) oder Trägerfahrzeugen und Anbaugeräten (2), wobei der Antriebskuppler (5) Mittel zum Ausgleich von Winkel- und Längenabweichungen aufweist und zumindest ein Gleichlaufgelenk (12) umfasst, **dadurch gekennzeichnet, dass** der Antriebskuppler (5) eine Druckfeder (9) aufweist, welche eine gesamte Gelenkwelle (10), bestehend aus zwei Gleichlaufgelenken (12) und einer Verbindungswelle umhüllt und durch ihre zwischen äußeren Flanschen der Gleichlaufgelenke (12) vorgespannte Einbaulage dazu eingerichtet ist, ein Abwinkeln des zumindest einen Gleichlaufgelenks (12) zu verhindern und den Antriebskuppler (5) insgesamt unterstützungsfrei in einer linear gestreckten Position auszurichten, wobei die Druckfeder (9) zwischen Stützscheiben (13) zentriert und vorgespannt ist und die Stützscheiben (13) jeweils mit den äußeren Gelenkkörpern der Gleichlaufgelenke (12) verbunden sind und somit die Druckfeder (9) beide Gelenke (12) axial ausrichtet und gestreckt hält.

2. Antriebskuppler (5) nach Anspruch 1, **dadurch gekennzeichnet, dass** der Antriebskuppler (5) endseitig ein erstes Kupplungselement (14) aufweist, das dazu eingerichtet ist, zum Übertragen von Drehmomenten mit einem zweiten Kupplungselement (15) zusammenzuwirken.

3. Antriebskuppler (5) nach zumindest einem der vorhergehenden Ansprüche, **dadurch gekennzeichnet, dass** das erste Kupplungselement (14) an seiner nach außen gerichteten Stirnfläche (16) Mitnehmernocken (18) aufweist, die dazu bestimmt sind, im gekuppelten Zustand in entsprechende Aussparungen eines zweiten Kupplungselements (15) formschlüssig einzugreifen.

4. Antriebskuppler (5) nach zumindest einem der vorhergehenden Ansprüche, **dadurch gekennzeichnet, dass** das erste Kupplungselement (14) einen Zentrierdorn (17) aufweist, der in seiner axialen Erstreckung über die Mitnehmernocken (18) nach außen hervorsteht.

5. Antriebskuppler (5) nach zumindest einem der vorhergehenden Ansprüche, **dadurch gekennzeichnet, dass** der Antriebskuppler (5) zumindest ein Gleichlauf-Verschiebegelenk (12) aufweist, wodurch Längenänderungen innerhalb des Antriebskupplers (5) ausschließlich Rollreibungskräfte verursachen.

## Claims

1. Drive coupler (5) for automatically interlockingly connecting a drive train, in particular between self-driving agricultural harvesting machines (1) or carrier vehicles and mounted implements (2), the drive coupler (5) comprising means for compensating for angular and length deviations and at least one constant velocity joint (12), **characterised in that** the drive coupler (5) comprises a compression spring (9) which encases an entire propeller shaft (10) consisting of two constant velocity joints (12) and a connecting shaft and is designed, on account of its mounted position in which it is prestressed between external flanges of the constant velocity joints (12), to prevent the at least one constant velocity joint (12) from bending and to orient the drive coupler (5) in a linearly extended position so as to be altogether unsupported, the compression spring (9) being centred and prestressed between supporting rings (13) and the supporting rings (13) each being connected to the external joint bodies of the constant velocity joints (12) and the compression spring (9) therefore axially orienting the two joints (12) and keeping said joints extended.

2. Drive coupler (5) according to claim 1, **characterised in that** the drive coupler (5) comprises a first coupling element (14) at the end, which element is designed to cooperate with a second coupling element (15) to transmit torques.

3. Drive coupler (5) according to at least one of the preceding claims, **characterised in that** the first coupling element (14) comprises driving cams (18) on the end face (16) thereof that is oriented outwards, which driving cams are intended to interlockingly engage in corresponding recesses in a second coupling element (15) when in the coupled state.

4. Drive coupler (5) according to at least one of the preceding claims, **characterised in that** the first coupling element (14) comprises a centring pin (17), the axial extension of which projects outwards beyond the driving cams (18).

5. Drive coupler (5) according to at least one of the preceding claims, **characterised in that** the drive coupler (5) comprises at least one constant velocity slip joint (12), as a result of which changes in length inside the drive coupler (5) only cause rolling friction forces.

## Revendications

1. Coupleur d'entraînement (5) permettant une liaison par la forme automatique d'une ligne d'entraînement en particulier entre des moissonneuses agricoles automotrices (1) ou des véhicules porteurs et des accessoires (2), ce coupleur d'entraînement (5) comprenant des moyens permettant de compenser les écarts angulaires et les écarts de longueur, et comprenant au moins un joint homocinétique (12),
**caractérisé en ce que**
le coupleur d'entraînement (5) comporte un ressort de pression (9) qui entoure la totalité d'un arbre de transmission (10) constitué de deux joints homocinétiques (12) et d'un arbre de liaison, et qui est réalisé pour permettre, par sa position de montage précontrainte entre les flancs externes des joints homocinétiques (12) d'éviter un pliage du joint homocinétique (12) et orienter le coupleur d'entraînement (5) globalement sans assistance dans une position s'étendant linéairement, le ressort de pression (9) étant centré et précontraint entre des disques d'appui (13), et les disques d'appui (13) étant chacun reliés par les corps externes du joint homocinétique (12) et ainsi le ressort de pression (9) dirige et maintient axialement les deux joints (12).

2. Coupleur d'entraînement (5) conforme à la revendication 1,
**caractérisé en ce qu'**
il comporte à une extrémité un premier élément de couplage (14) qui est réalisé pour coopérer avec un second élément de couplage (15) de façon à transmettre des couples de torsion.

3. Coupleur d'entraînement (5) conforme à l'une des revendications précédentes,
**caractérisé en ce que**
le premier élément de couplage (14) comporte sur sa face frontale (16) dirigée vers l'extérieur, des cames d'entraînement (18) qui sont adaptées pour venir en prise par une liaison par la forme dans des évidements correspondants d'un second élément de couplage (15) à l'état couplé.

4. Coupleur d'entraînement (5) conforme à au moins l'une des revendications précédentes,
**caractérisé en ce que**
le premier élément de couplage (14) comporte une broche de centrage (17) dont l'extension axiale dépasse vers l'extérieur des cames d'entraînement (18).

5. Coupleur d'entraînement (5) conforme à au moins l'une des revendications précédentes,
**caractérisé en ce qu'**
il comporte au moins un joint universel homocinétique (12) permettant que des variations de longueur à la partie interne du coupleur d'entraînement (5) ne provoquent que des forces de frottement de roulement.
